Europäisches Patentamt

(19) European Patent Office

Office européen des brevets

(11) Publication number: **0 213 388 B1**

(12) EUROPEAN PATENT SPECIFICATION

(45) Date of publication of the patent specification: 12.09.90

(51) Int. Cl.⁵: **G11B 5/60,** G11B 5/187

(21) Application number: 86110340.6

(22) Date of filing: 26.07.86

(54) Self-loading slider for magnetic recording heads and method of fabricating such a slider.

(30) Priority: **22.08.85 US 770022**

(43) Date of publication of application: **11.03.87 Bulletin 87/11**

(45) Publication of the grant of the patent: **12.09.90 Bulletin 90/37**

(84) Designated Contracting States: **DE FR GB**

(56) References cited:
SOVIET INVENTIONS ILLUSTRATED, section P, week K47, abstract 83-825549/47, 11th January 1984, Derwent Publications Ltd, London, GB; & SU-A-991 495 (V.D. LAZAREV) 25-01-1983
PATENT ABSTRACTS OF JAPAN, vol. 8, no. 18, (P-250)[1455], 26th January 1984; & JP-A-58 177 558
PATENT ABSTRACTS OF JAPAN, vol. 5, no. 96 (P-67)[768], 23rd June 1981; & JP-A-56 41 557
PATENT ABSTRACTS OF JAPAN, vol. 3, no. 22 (E-93), 24th February 1979; & JP-A-54 1011
PATENT ABSTRACTS OF JAPAN, vol. 3, no. 38 (E-101), 30th March 1979; & JP-A-54 17 712

(73) Proprietor: **MEMOREX CORPORATION, San Tomas at Central Expressway, Santa Clara California 95052(US)**

(72) Inventor: **Ghose, Sanjoy, 219 Archer Dr., Santa Cruz, CA 95060(US)**

(74) Representative: **Eisenführ, Speiser & Strasse, Martinistrasse 24, D-2800 Bremen 1(DE)**

## Description

This invention relates to a self-loading slider for flying a magnetic head on a fluid bearing relative to magnetic recording media moving in a predetermined direction in the fluid as well as to a method of making, from a block of rigid material, a slider for flying a magnetic head on a fluid bearing adjacent magnetic recording media.

Magnetic head assemblies, comprising sliders carrying magnetic transducers, are widely and extensively used in magnetic recording apparatus, particularly disc recording apparatus. Various types of head/slider arrangements that fly on a fluid or air bearing film over the moving recording media surface are well known in the art. In order to maximize the density of stored data on such magnetic discs, the flying height of the transducer above the media is made as small as is practical, with the requirement that a substantially constant height be maintained. Conventionally, the sliders are designed such that they experience, from their support arms, a constant pressure toward the disc surface, with the lifting force of the air bearing serving to hold the slider and transducer away from the disc surface the desired amount when the disc is rotating.

Among the various types of known slider configurations are those of Garnier et al. US-A-3,855,625, Roscamp et al. US-A-4,081,846 and the trimaran structure of Warner US-A-3,823,416.

One type of slider which has been developed and which may possess some self-loading characteristic is that shown in the Garnier et al. patent. This slider, having what is known as a taper-flat configuration with a ramped portion at the leading edge and two air bearing rails extending therefrom to the trailing edge with a rectangular recess therebetween, has provided satisfactory operation in many respects. The structure is substantially self-loading in that the rectangular recess provides a low pressure area to counteract some of the lift provided by the air bearing side rails such that the device tends to fly a distance above the moving media surface which can be controlled by the relationship between the rectangular recess and the fluid bearing rails. However, the Garnier et al. structure possesses several major disadvantages both in fabrication and in operation. Since the recessed area of that structure is rectangular and is enclosed on three sides by walls, fabrication of the device requires surface etching to produce the necessary configuration. The requirement for such etching severely restricts the types of material that can be used for manufacturing such sliders, since not all materials are susceptible of precisely controlled etching. Additionally, the sharp edges of the recessed cavity, which edges are substantially perpendicular to the air bearing surface, act as collectors of dust, debris and foreign material. A build-up of such material in this cavity can change the operating conditions of the slider and head assembly significantly.

Even the slider configurations of Roscamp et al. and Warner require expensive processes such as grinding and lapping within confined areas between side rails. Such requirements not only increase the manufacturing costs but also may have adverse effects upon the production yield.

To overcome the above disadvantages one type of slider has been developed as shown in Soviet Inventions Illustrated Section P, week K47, abstract 83-825549/47 (Derwent Publications) of January 11, 1984 and in Patent Abstracts of Japan, vol. 8, no. 18 (P-250) (1455) of January 26, 1984. This slider comprises a slider body having a fluid bearing surface having leading and trailing edges for flying above the moving media. The fluid bearing surface comprises a generally planar fluid support surface extending generally transvers to the predetermined direction of movement of said media. A portion of the leading edge of this known slider defines a ramp angled away from the plane of the fluid support surface and said media. The fluid bearing surface comprises a cavity having a generally spherical surface formed in the fluid support surface and spaced from the leading edge. Thus, the spherical cavity serves to create a reduced pressure area on the fluid bearing surface when the slider is flying above the moving media to maintain the slider at a close and substantially constant distance from the media. The disadvantage of this slider is that controlling of the reduced pressure generated by the fluid bearing surface and the flying height of the slider above the media is rather difficult.

## Summary of the invention

The present invention provides a slider which overcomes many of the above disadvantages of the prior art devices. It is an object of this invention to provide a novel and improved slider for flying a magnetic head a substantially constant spacing from the moving magnetic media during operation by creating a reduced pressure area of predetermined characteristics to maintain the flying height at a predetermined, desired level.

A further object is to provide such a slider, which is easy and economical to manufacture.

To achieve the foregoing, the present invention provides a slider comprising a slider body having means defining a fluid bearing surface having leading and trailing edges for flying above the moving media, the fluid bearing surface defining means comprising a generally planar fluid support surface extending generally transverse to the predetermined direction of movement of said media, a portion of said slider leading edge defining a ramp angled away from the plane of said fluid support surface and said media, and a cavity having a generally spherical surface formed in said fluid support surface and spaced from said leading edge, whereby the spherical cavity may serve to create a reduced pressure area on the fluid bearing surface when the slider is flying above the moving media to maintain the slider at a close and substantially constant distance from the media, wherein the spherical cavity of the slider of the present invention has an opening into the slider trailing edge, whereby fluid within the cavity may be exhausted through the trailing edge opening. Thus, the spherical cavity opening to the trailing edge of the slider serves to create a reduced or negative pressure area of predetermined characteristics, to maintain the flying height of a predetermined, desired level.

Furthermore, the present invention provides a method of fabricating such a slider comprising the steps of forming a concave, spherically curved surface having a predetermined spherical radius in one surface of said block, removing portions of said spherical surface to form a generally planar surface surrounding at least portions of the periphery of the remaining said spherical surface, and forming a ramp surface away from the plane of said flat surface and toward one predetermined edge of said block, which is defined as the leading edge thereof and is opposite the trailing edge thereof, which method comprises an additional step of removing a portion of the block trailing edge such that the spherical cavity opens through the trailing edge. The present invention provides for a simple and straight forward manufacturing process and the formation thereby of a slider whose flying characteristics may be easily and carefully controlled during manufacture.

Brief Description of the Drawings

The invention will be described in greater detail below with reference to the drawings in which:

FIGURE 1 is a perspective view of the slider of the present invention;
FIGURE 2 is a perspective view of a known prior art slider;
FIGURE 3 is a sectional view, at an enlarged scale, taking along line 3-3 of the slider of FIGURE 1;
FIGURE 4 is a sectional view, similar to FIGURE 3, illustrating the relationship between two such sliders and disc recording media; and
FIGURES 5 through 10 are perspective views of the device of FIGURE 1 illustrating the basic steps during a preferred method of manufacture.

Description of a Preferred Embodiment

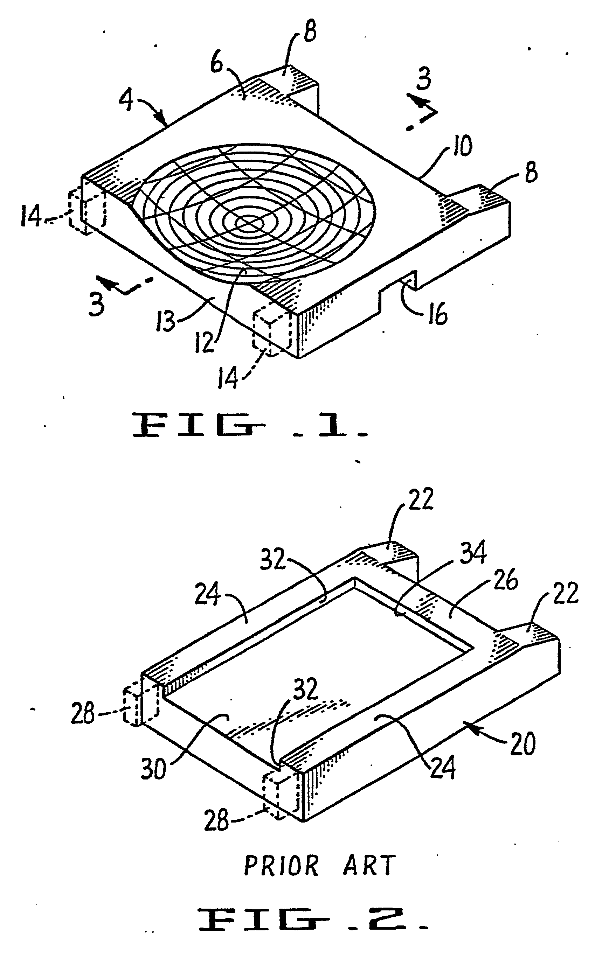

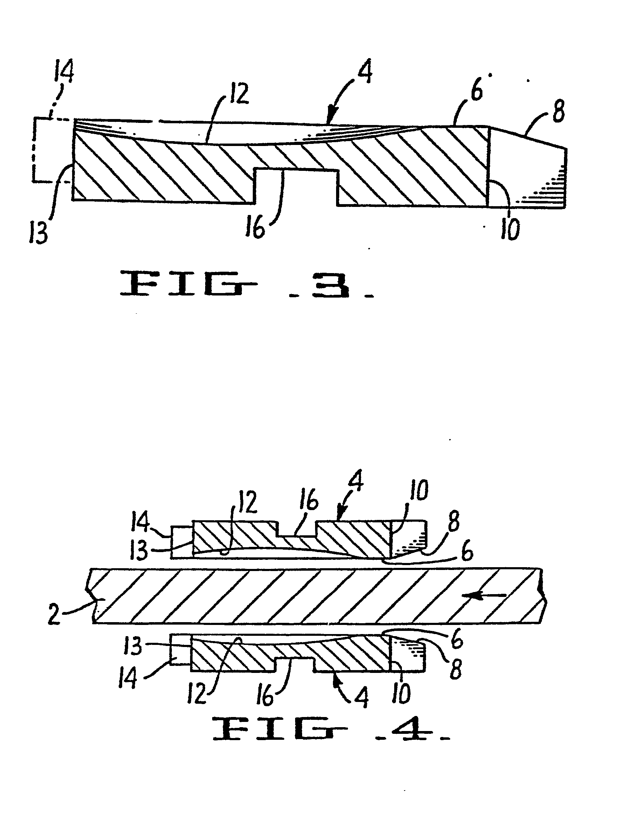

A particularly preferred embodiment of the slider of the present invention is illustrated in the perspective view of FIGURE 1, with a schematic representation of the relationship of a pair of such sliders to moving recording media being shown in the sectional view of FIGURE 4. The relative movement between the recording media 2, which may suitably be a double faced recording disc, and the slider body 4, such movement being indicated by the arrow on the media in FIGURE 4, serves to define the leading and trailing edges of the slider.

As shown most clearly in FIGURE 1, the slider body 4 includes on one broad surface thereof a generally flat or planar surface 6 extending generally transverse to the direction of movement of the media 2. This planar surface forms a fluid support surface in a manner to be described below. In this preferred embodiment, a portion of the leading edge of the slider body 4 comprises a pair of ramp surfaces 8 angled away from the plane of the fluid support surface 6 and, in FIGURE 4, away from the media 2. These ramp portions 8 preferably are in the form of a pair of projections extending forward of the other portions 10 of the slider leading edge. Thus, it may be seen that the ramp portions 8 and the fluid support surface 6 generally define a combination known in the art as a taper-flat surface.

Spaced from the leading edge of the slider body 4 in the slider fluid support surface is a cavity 12 having a generally spherical surface. This cavity may suitably have a spherical radius of about 8 inches (20 cm), forming a cavity having a typical depth suitably on the order of about 500 microinches (13 micrometers) below the plane of the fluid support surface 6. The cross hatching shown within the generally spherical cavity 12 of FIGURE 1 is included solely for illustrating the generally spherical nature of that cavity and does not represent marking or scoring on an actual item.

To provide for the desired operation of this slider, the generally spherical cavity 12 is dimensioned and positioned with respect to the slider such that it has an opening into the slider trailing edge 13, so that fluid within the cavity may be exhausted through the trailing edge opening, in a manner to be described below.

Although they form no part of this present invention, a pair of magnetic transducers 14, suitably of conventional and well-known construction, are schematically illustrated in phantom as extending outwardly from the trailing edge 13 of the slider, simply to illustrate the general relationship between the slider and the transducers. Additionally, a conventional mounting slot 16 may be formed on the other broad surface on the side of the transducer body 4 opposite from the fluid support surface 6. This slot 16 may be utilized in the conventional manner for mounting.

As previously noted, the slider of this invention is utilized for flying magnetic recording heads, such as those schematically indicated as items 14 on the drawings, a small, predetermined distance above the surface of moving magnetic recording media, such as disc 2 of FIGURE 4. It is to be understood that FIGURE 4 is merely a schematic illustration of the general relationship between the sliders 4 and the media 2, and the distances and sizes are distorted to illustrate more clearly the functional relationships. It is also to be understood that the term "above" the surface of the media is intended to mean merely spaced from the media surface, since the sliders may be utilized with either the upwardly or downwardly facing surfaces of the media, as illustrated in FIGURE 4.

The configuration of the slider of this invention thus provides for both fluid bearing support of the slider and head assembly, and also self-loading to a predetermined height. This is accomplished by the lift or support provided by the fluid bearing support surface 6 and ramps 8 cooperating with the film of fluid, such as air, entrained with the moving surface of the recording media 2 to lift the slider above the surface of the media. To maintain the flying height at a predetermined, desired level, the spherical cavity 12 opening to the trailing edge of the slider serves to create a reduced or negative pressure area of predetermined characteristics to counteract a portion of the lift generated by the support surfaces 6 and 8.

Functionally, the slider of this invention operates in a manner generally similar to that of the prior art, illustrated in FIGURE 2. This prior art slider 20 is of the conventional, taper-flat configuration with ramps 22 leading into air bearing support side rails 24 which run the length of the slider. At the leading edge of the slider a cross rail 26 extends between the two side rails 24. Suitable magnetic transducers 28, schematically illustrated in phantom, are provided at the trailing edge of the transducer.

In this prior art slider 20 the flying height is controlled by the provision of a rectangular cavity 30 bounded on three sides by the side rails 24 and the cross rail 26. This cavity 30, generally formed by various etching techniques, is disadvantageous in that the manufacturing processes form side walls 32 and 34 between the base of the cavity 30 and the side rails 24 and transverse rail 26, which side walls are generally perpendicular to the surfaces of the side rail and transverse rail. The abrupt break between the fluid bearing support surfaces and the side walls, as well as the corners at the leading edge of the recess 30 have tended to trap dust and debris and to make continued control of the flying height difficult. As noted above, the necessity for forming such a structure by etching has also limited the materials from which the slider could be fabricated and has complicated the manufacturing process.

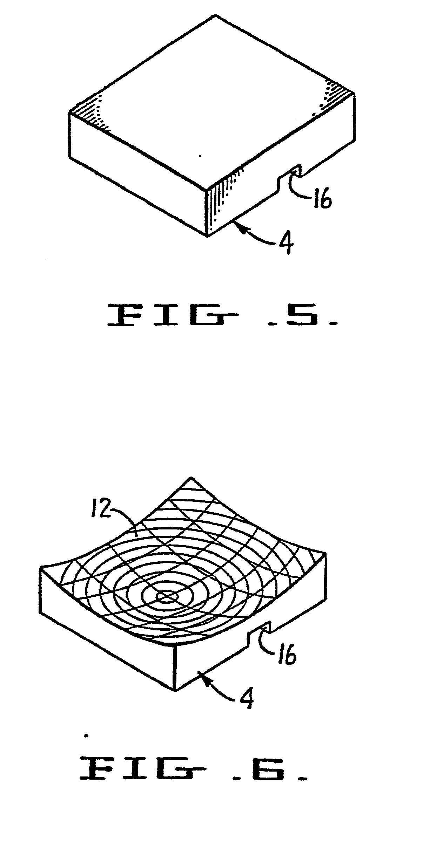

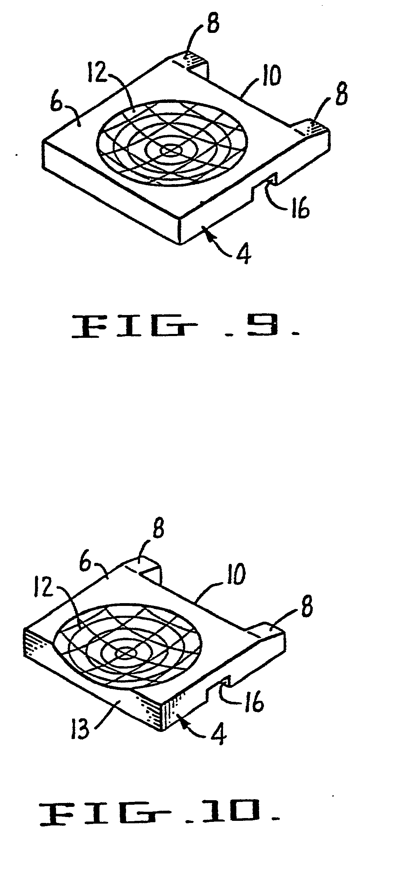

A suitable and preferred method of fabricating the slider of the present invention is illustrated in the sequential steps of FIGURES 5 through 10.

Initially, a blank block of material, which may be ferrite, ceramic, or any other appropriate material, may be formed, suitably of a rectangular or square configuration. In the blanking process the mounting slots 16 may also be formed if desired.

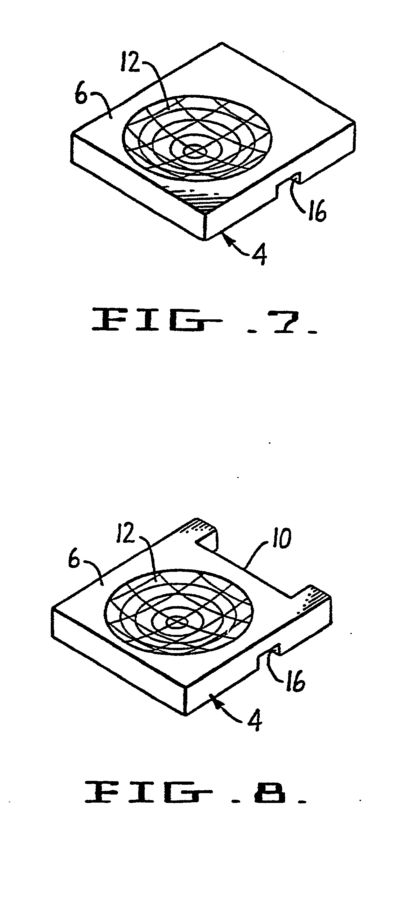

Next, as illustrated in FIGURE 6, a concave, spherically curved surface having a predetermined spherical radius may be formed on the broad surface of the blank opposite the surface having slot 16. This concave surface may be produced by conventional and well know lapping techniques, such as are utilized in lens making and other applications. This process may suitably form a spherically curved cavity having an appropriate predetermined center and radius of curvature, with the cavity extending across all portions of that desired surface.

After formation of the appropriate spherically curved surface, portions of that surface may be removed, as by conventional flat lapping, to form a generally flat or planar surface 6 surrounding at least portions of the periphery of the remaining spherical surface 12. In the preferred embodiment the original slider blank is made somewhat oversized so that the flat surface 6 surrounds substantially the entire periphery of the spherically curved surface 12, as shown in FIGURE 7.

As a succeeding step, portions of the leading edge of the slider blank may be cut away, as illustrated in FIGURE 8. This step is not absolutely necessary, since, alternatively, the leading edge of the slider block 4 could have been relieved during the blanking process of the original block of slider material.

In the next step the taper is ground and lapped onto the ramp portions 8 which form the projections on the leading edge of the slider block, as shown in FIGURE 9.

In this preferred embodiment, in which the blank of slider material was initially made oversized, a portion of the trailing edge of the block is removed, suitably by conventional dicing techniques, to provide for the final sizing of the slider and also to provide for the appropriate opening of the spherically curved cavity 12 through the trailing edge. As noted above, it is also possible that this step could be obviated by sizing the original blank more closely to the final dimensions desired so that the spherically curved cavity 12 would have the appropriate opening through the trailing edge after the flat lapping step illustrated in FIGURE 7.

The advantages of the foregoing manufacturing method for fabricating the slider may now be seen. Instead of requiring, as the prior art devices of this nature do, that the material be capable of etching, it is only necessary that relatively simple and straightforward spherical and flat lapping techniques be used. Additionally, the very shallow angle between the edges of the cavity 12 and the support surface 6 serves to reduce or eliminate the contamination problem experienced with the etched, prior art devices. All of these characteristics serve to provide a slider which not only has desirable operating characteristics, but also which is susceptible of economical manufacture.

## Claims

1. A self-loading slider for flying a magnetic head on a fluid bearing relative to magnetic recording media (2) moving in a predetermined direction in the fluid, comprising a slider body (4) having means defining a fluid bearing surface having leading and trailing edges (13) for flying above the moving media (2), the fluid bearing surface defining means comprising a generally planar fluid support surface (6) extending generally transverse to the predetermined direction of movement of said media (2);

a portion of said slider leading edge defining a ramp (8) angled away from the plane of said fluid support surface (6) and said media (2); and a cavity (12) having a generally spherical surface formed in said fluid support surface (6) and spaced from said leading edge, whereby the spherical cavity (12) may serve to create a reduced pressure area on the fluid bearing surface (6) when the slider is flying above the moving media (2) to maintain the slider at a close and substantially constant distance from the media; characterized in that said spherical cavity (12) has an opening into said slider trailing edge (13), whereby fluid within the cavity may be exhausted through the trailing edge (13) opening.

2. The slider of claim 1, wherein said ramp portion (8) of said slider leading edge comprises a pair of spaced apart projections extending forward the other portions of said slider leading edge.

3. The slider of claim 1 or 2, wherein the cavity (12) is lapped spherically into said support surface (6) such as to substantially eliminate dust collection and minimize dynamic pressure peaks adjacent the trailing edge during operation.

4. The slider of one of claims 1 to 3, wherein said generally planar fluid support surface (6) is adapted to generate a prescribed positive pressure during operation, while said spherical cavity (12) serves to create a controlled reduced pressure area on the fluid bearing surface (6) and prescribed reduced pressure when the slider (4) is flying above the moving media (2), whereby a prescribed net pressure is developed by the slider (4) in operation.

5. The method of making, from a block of rigid material, a self-loading slider for flying a magnetic head on a fluid bearing adjacent magnetic recording media (2), comprising the steps of forming a concave, spherically curved surface (12) having a predetermined spherical radius in one surface of said block, removing portions of said spherical surface (12) to form a generally planar surface (6) surrounding at least portions of the periphery of the remaining said spherical surface (12);

and forming a ramp surface (8) away from the plane of said flat surface (6) and toward one predetermined edge of said block, which is defined as the leading edge thereof and is opposite the trailing edge (13) thereof; characterized by a further step of removing a portion of said block trailing edge (13) such that said spherical cavity (12) opens through said trailing edge (13).

6. The method of claim 5, wherein said flat surface (6) surrounds substantially the entire periphery of said remaining spherical surface (12).

7. The method of claim 5 or 6 further comprising the step of removing a portion of said block leading edge spaced from the lateral edges thereof such that said ramp surface (8) comprises a pair of spaced apart forwardly projecting portions.

**Patentansprüche**

1. Ein selbstladender Gleiter, damit ein Magnetkopf auf einem Fluidlager gegenüber sich in einer bestimmten Richtung im Fluid bewegenden, magnetischen Media (2) fliegt, mit

einem Gleitkörper (4) mit Mitteln, die eine Fluidlagerfläche mit vorlaufenden und nachlaufenden Rändern (13) zum Fliegen über den sich bewegenden Media (2), wobei die Fluidlagerfläche Mittel bildet, die aufweisen

eine im wesentlichen ebene Fluidstützfläche (6), die sich im wesentlichen quer zur Bewegungsrichtung der Media erstreckt;

einen Abschnitt des vorlaufenden Gleiterrandes, der eine Rampe (8) definiert, die von der Ebene der Fluidstützfläche (6) und den Media (2) weggeneigt ist; und eine Aushöhlung (12), mit einer im allgemeinen sphärischen Fläche, die in der Fluidstützfläche (6) ausgebildet und im Abstand zum vorlaufenden Rand angeordnet ist, wodurch die sphärische Aushöhlung (12) zur Erzeugung eines reduzierten Druckbereiches auf der Fluidlagerfläche (6) dienen kann, wenn der Gleiter über die sich bewegenden Media (2) fliegt, um den Gleiter in einem dichten und im wesentlichen konstanten Abstand zu den Media zu halten; dadurch gekennzeichnet, daß die sphärische Aushöhlung (12) eine Öffnung zum hinteren Gleiterrand (13) besitzt, wodurch das Fluid innerhalb der Aushöhlung durch die Öffnung im nachlaufenden Rand (13) ausgeblasen werden kann.

2. Gleiter nach Anspruch 1, bei welchem der Rampenabschnitt (8) der vorlaufenden Gleiterkante ein Paar von im Abstand zueinander angeordneten Vorsprüngen aufweist, die sich über die anderen Abschnitte der vorlaufenden Gleiterkante hinaus erstrecken.

3. Gleiter nach Anspruch 1 oder 2, bei welchem die Aushöhlung (12) sphärisch in eine Stützfläche (6) hineingeläppt ist, um eine Ansammlung von Staub im wesentlichen zu beseitigen und dynamische Druckspitzen benachbart zum nachlaufenden Rand während des Betriebes zu minimieren.

4. Gleiter nach einem der Ansprüche 1 bis 3, bei welchem die im allgemeinen ebene Fluidstützfläche (6) angepaßt ist, um einen vorbestimmten positiven Druck während des Betriebes zu erzeugen, während die sphärische Aushöhlung (12) zur Erzeugung eines kontrollierten reduzierten Druckbereiches auf der Fluidlagerfläche (6) und eines vorbestimmten reduzierten Druckes dient, wenn der Gleiter (4) über die sich bewegenden Media (2) fliegt, wobei ein vorbestimmter Netto-Druck durch den Gleiter (4) im Betrieb entwickelt wird.

5. Das Verfahren zur Herstellung eines selbstladenden Gleiters, damit ein Magnetkopf auf einem Fluidlager benachbart zu Magnetaufzeichnungsmedia (2) fliegt, aus einem Block von festem Material, mit den Schritten Bildung einer konkaven, sphärisch gekrümmten Oberfläche (12) mit einem vorbestimmten sphärischen Radius auf einer Oberfläche des Blocks, Beseitigung von Abschnitten der sphärischen Oberfläche (12), um eine im wesentlichen ebene Oberfläche (6) zu bilden, die mindestens Abschnitte des Umfangs des übriggebliebenen Teils der sphärischen Oberfläche (12) umgibt; und Ausbildung einer abgeschrägten Fläche (8), die von der Ebene der ebenen Fläche (6) weg und zu einem vorbestimmten Rand des Blockes in gerichtet ist, der als dessen vorlaufender Rand gebildet ist und dessen nachlaufendem Rand (13) gegenüberliegt; gekennzeichnet durch einen weiteren Schritt zur Beseitigung eines Abschnittes des nachlaufenden Blockrandes (13), so daß sich die sphärische Aushöhlung (12) durch den nachlaufenden Rand (13) öffnet.

6. Verfahren nach Anspruch 5, bei welchem die ebene Fläche (6) im wesentlichen den gesamten Umfang der übriggebliebenen sphärischen Fläche (12) umgibt.

7. Verfahren nach Anspruch 5 oder 6, das ferner den Schritt einer Beseitigung eines Abschnittes des vorlaufenden Blockrandes aufweist, der in einem solchen Abstand von den Seitenrändern angeordnet ist, daß die abgeschrägte Fläche (8) ein Paar von im Abstand zueinander angeordneten, nach vorne vorstehenden Abschnitten aufweist.

## Revendications

1. Patin auto-chargeable pour faire flotter une tête magnétique sur un support à fluide par rapport à un support d'enregistrement magnétique (2) se déplaçant dans une direction prédéterminée dans le fluide, comprenant un corps de patin (4) muni de moyens définissant une surface de support à fluide comportant des bords avant et arrière (13) pour flotter au-dessus du support d'enregistrement mobile (2), la surface de support à fluide définissant des moyens comprenant une surface de support à fluide généralement plane (6) disposée d'une façon générale transversalement par rapport à la direction de mouvement prédéterminée du support d'enregistrement (2) ;

- une partie du bord avant du patin comportant une rampe (8) formant un angle ouvert vers l'extérieur par rapport au plan de la surface de support à fluide (6) et au support d'enregistrement (2) ; et
- une cavité (12) présentant une surface généralement sphérique formée dans la surface de support à fluide (6) à une certaine distance du bord avant, de façon que la cavité sphérique (12) puisse servir à créer une zone de pression réduite sur la surface de support à fluide (6) lorsque le patin flotte au-dessus du support d'enregistrement mobile (2), pour maintenir ainsi le patin à une distance proche et parfaitement constante du support d'enregistrement ; patin caractérisé en ce que la cavité sphérique (12) comporte une ouverture dans le bord arrière (13) du patin, de façon que le fluide se trouvant dans la cavité puisse être évacué par cette ouverture du bord arrière (13).

2. Patin selon la revendication 1, caractérisé en ce que la partie de rampe (8) du bord avant de ce patin forme une paire de projections écartées situées vers l'avant des autres parties de ce bord avant du patin.

3. Patin selon l'une quelconque des revendications 1 et 2, caractérisé en ce que la cavité (12) est rodée sphériquement dans la surface de support (6) de manière à supprimer complètement tout risque d'accumulation de poussière et à minimiser les pointes de pression dynamique au voisinage du bord arrière en cours de fonctionnement.

4. Patin selon l'une quelconque des revendications 1 à 3, caractérisé en ce que la surface de support à fluide généralement plane (6) est conçue pour produire une pression positive prescrite en cours de fonctionnement, tandis que la cavité sphérique (12) sert à produire une zone de pression réduite contrôlée sur la surface de support à fluide (6) et une pression réduite prescrite lorsque le patin (4) flotte au-dessus du support d'enregistrement mobile (2), de façon qu'une pression nette prescrite soit développée par le patin (4) en cours de fonctionnement.

5. Procédé de fabrication, à partir d'un bloc de matériau rigide, d'un patin auto-chargeable destiné à faire flotter une tête magnétique sur un support à fluide au voisinage d'un support d'enregistrement magnétique (2), ce procédé comprenant les différentes étapes consistant à former, dans une surface du bloc, une surface concave à courbure sphérique (12) présentant un rayon de courbure sphérique prédéterminé, à retirer certaines parties de la surface sphérique (12) pour former une surface généralement plane (6) entourant certaines parties au moins du pourtour du reste de la surface sphérique (12) ; et à former une surface de rampe (8) s'écartant du plan de la surface plane (6) et dirigée vers un bord prédéterminé du bloc défini comme le bord avant de ce bloc et opposé au bord arrière (13) de celui-ci, procédé caractérisé en ce qu'il comprend une étape supplémentaire consistant à retirer une partie du bord arrière (13) du bloc de façon que la cavité sphérique (12) débouche à travers ce bord arrière (13).

6. Procédé selon la revendication 5, caractérisé en ce que la surface plane (6) entoure essentiellement tout le pourtour de la surface sphérique restante (12).

7. Procédé selon l'une quelconque des revendications 5 et 6, caractérisé en ce qu'il comprend en outre l'étape consistant à retirer une partie du bord avant du bloc espacée des bords latéraux de celui-ci, de façon que la surface de rampe (8) soit constituée par une paire de parties écartées faisant saillie vers l'avant.

FIG .1.

PRIOR ART

FIG .2.

FIG .3.

FIG .4.

FIG .5.

FIG .6.

FIG .7.

FIG .8.

FIG .9.

FIG .10.